# FASCICULE DE BREVET EUROPEEN

(11) **EP 3 465 011 B1**
(45) Date de publication et mention de la délivrance du brevet: **11.11.2020**
(21) Numéro de dépôt: 17729523.5
(22) Date de dépôt: 22.05.2017
(51) Int. Cl.: F23R 7/00, F02K 7/04

(54) **CHAMBRE DE COMBUSTION ANNULAIRE A ONDE DE DÉTONATION CONTINUE**
RINGBRENNKAMMER MIT KONTINUIERLICHER DETONATIONSWELLE
ANNULAR COMBUSTION CHAMBER WITH CONTINUOUS DETONATION WAVE

(30) Priorité: 23.05.2016 FR 1654570
(43) Date de publication de la demande: 10.04.2019
(73) Titulaire: Safran, 75015 Paris (FR)
(72) Inventeur: LEYKO, Matthieu, 77550 MOISSY-CRAMAYEL CEDEX (FR); CAZALENS, Michel, Pierre, 77550 MOISSY-CRAMAYEL CEDEX (FR)
(74) Mandataire: Cabinet Beau de Loménie
(86) Numéro de dépôt international: PCT/FR2017/051252
(87) Numéro de publication internationale: WO 2017/203145

(56) Documents cités:
- EP-A1- 2 480 771
- WO-A1-2014/129920
- US-A1- 2009 158 748
- WANG F ET AL: "Transient plasma ignituion of hydrocarbon-air mixtures in pulse detonation engines", AIAA AEROSPACE SCIENCES MEETING / AIAA THERMOPHYSICS CONFERENCE, XX, XX, no. Paper 2004-0834, 1 janvier 2004 (2004-01-01), pages 1-8, XP009138055,

## Description

### Arrière-plan de l'invention

L'invention se rapporte à un système de combustion par détonation continue assisté par plasma.

Il est connu que pour diminuer significativement la consommation spécifique d'une turbomachine aéronautique à turbine à gaz (turbomoteur, turbosoufflante, turbopropulseur, etc...), il convient de modifier son cycle thermodynamique.

Les turbines à gaz conventionnelles fonctionnent selon le cycle de Brayton où la combustion se déroule à pression constante (isobare) et dans un régime de déflagration (propagation du front de combustion via la diffusion moléculaire et thermique). Pour permettre une amélioration de 10% à 20% du rendement thermique d'une machine, il est connu de recourir à la combustion dans un régime de détonation (propagation du front de combustion via le couplage entre une onde de choc et la zone de réaction chimique). La communauté scientifique à l'habitude de citer Fickett & Jacobs pour le cycle thermodynamique associé à ce mode de combustion.

Actuellement, plusieurs solutions existent pour obtenir un régime de détonation dans une chambre de combustion.

Une première solution connue sous le nom de PDE (Pulse Détonation Engine) consiste à initier périodiquement une détonation après le remplissage de la chambre de combustion avec un mélange détonant. Après la détonation, les gaz brûlés doivent être purgés et le cycle recommence. L'inconvénient de cette solution est qu'il faut déclencher une détonation pour chaque cycle et ceci à des fréquences de l'ordre de 100Hz. Dans cette solution, le système d'allumage est l'élément critique (pour causes de taille, fiabilité, etc.) et un système de vannage à l'amont de la chambre de combustion est nécessaire.

Une autre solution qui corrige en partie l'inconvénient de la première, consiste à initier la détonation une seule fois et ensuite à maintenir une onde de détonation stationnaire ou tournante. Dans ce dernier cas, l'injection d'un mélange détonant se fait axialement dans une chambre de combustion annulaire, et l'onde de détonation se propage de façon circonférentielle. Connu sous le nom de RDE (Rotating Détonation Engine), l'intérêt de ce système pour la propulsion anaérobie (moteur fusée) est maintenant admis par la communauté scientifique. En revanche, cette solution technologique ne fait pas l'unanimité quant à son utilisation pour la propulsion aérobie (turbomachine ou statoréacteur), c'est-à-dire pour un mélange de carburant et d'air, où la proportion d'oxygène est faible par rapport à l'azote. Dans le cas d'une utilisation d'un kérosène liquide avec de l'air, le mélange réactif serait « difficile » à faire détoner de même que maintenir, dans la chambre de combustion, une détonation établie dans des conditions idéales.

Aussi, il a été proposé avec le brevet EP2480771 (ou demande US2012/0151898) une structure de chambre de combustion dont l'onde de détonation est maintenue grâce à la génération d'un plasma transitoire. Toutefois, cette structure présente encore certains inconvénients comme la nécessité d'une grande énergie du fait du dépôt non-localisé du plasma ou une initiation chaotique de la détonation et notamment elle nécessite toujours le recours à un système d'initiation encore complexe pour faire détoner le mélange une première fois.

### Objet et résumé de l'invention

La présente invention a donc pour but principal de proposer une solution technique visant à corriger ce défaut.

Ce but est atteint grâce à une chambre de combustion annulaire et du type à onde de détonation continue selon l'objet de la revendication 1.

Ainsi, en créant un rideau tournant de plasma, on peut initier simplement la détonation sans recourir aux systèmes complexes de l'art antérieur.

De préférence, ladite pluralité d'électrodes est disposée au niveau d'extrémités amont respectives de parois externe et interne de ladite chambre de combustion annulaire.

Avantageusement, ledit générateur de courant est configuré pour alimenter chacune desdites paires d'électrodes précédant au moins un front de détonation de ladite onde de détonation.

Selon l'invention, pour assurer l'alimentation l'une après l'autre de chacune desdites paires d'électrodes, ledit générateur de courant est configuré pour arrêter l'alimentation de ladite au moins une paire d'électrodes lorsque ladite au moins une paire d'électrodes adjacente doit être alimentée.

Avantageusement, lesdites électrodes présentent chacune une section en T avec une première partie conductrice formant plaque effleurant à la surface interne de ladite chambre de combustion annulaire et une seconde partie conductrice, perpendiculaire à la première, en contact électrique avec elle et traversant radialement ladite chambre de combustion annulaire pour assurer une connexion électrique de ladite plaque conductrice avec ledit générateur de courant.

De préférence, deux plaques conductrices de deux électrodes adjacentes comportent entres elles une distance de l'ordre d'au plus quelques millimètres.

Avantageusement, lesdites électrodes et ladite chambre de combustion annulaire sont séparées par une couche de matériau isolant (avantageusement céramique) pour isoler électriquement lesdites électrodes de la structure de la chambre de combustion annulaire.

De préférence, chaque couronne comporte un nombre d'électrodes compris entre huit et soixante-quatre.

L'invention concerne également une turbomachine comportant une chambre de combustion annulaire telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue externe de la partie amont d'une chambre de combustion annulaire selon l'invention ;
- la figure 2 est une vue de face de la chambre de combustion annulaire de la figure 1 montrant le système de génération et d'assistance de détonation ;
- les figures 3A à 3C illustrent trois exemples de réalisation de système de génération et d'assistance de détonation;
- la figure 4 montre un détail de la chambre de combustion annulaire de la figure 1 ; et
- les figures 5A à 5D illustrent différentes phases de fonctionnement de la chambre de combustion annulaire selon l'invention.

### Description détaillée d'un mode de réalisation

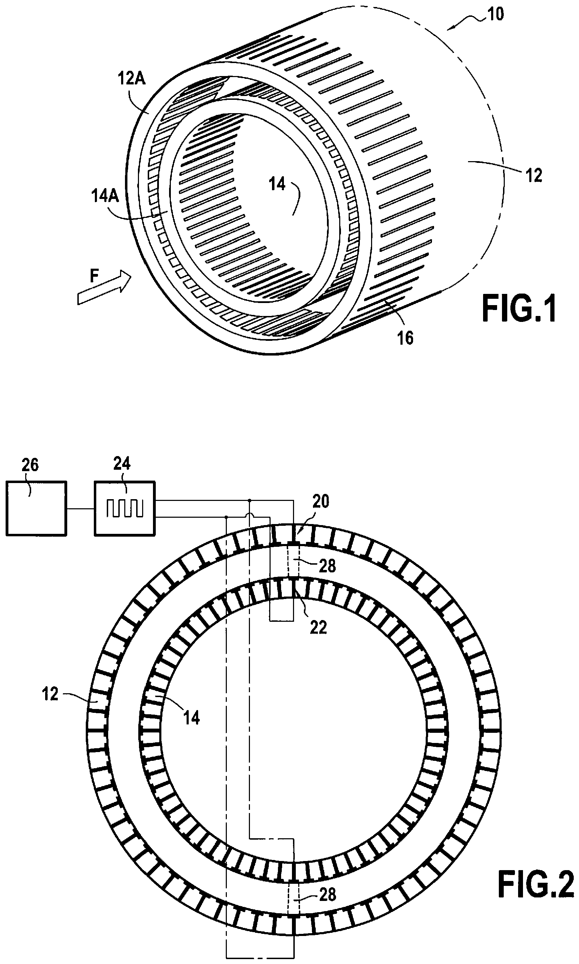

La figure 1 montre partiellement de façon schématique une chambre de combustion annulaire du type à onde de détonation continue 10 définie par une paroi externe 12 et une paroi interne 14 et destinée à recevoir axialement un mélange réactif subsonique (association d'un carburant comme un hydrocarbure gazeux ou liquide et d'un comburant comme de l'air ou de l'oxygène) pour, conformément à l'invention, générer une onde de détonation continue et la propager de façon circonférentielle dans la chambre de combustion annulaire.

Pour ce faire, la chambre de combustion annulaire comporte dans sa partie amont illustrée (par rapport au flux F de mélange traversant axialement la chambre) des moyens de génération de plasma 16 disposés au plus près des extrémités amont 12A, 14A respectives des parois interne et externe de la chambre de combustion annulaire 10.

La figure 2 illustre schématiquement en vue de face un exemple d'implantation des moyens de génération de plasma 16 au niveau des extrémités amont 12A, 14A respectives des parois interne et externe de la chambre de combustion annulaire et qui sont constitués par un ensemble de paires d'électrodes 20, 22 formant deux couronnes concentriques, les deux électrodes d'une même paire, appartenant chacune à une couronne différente et entre lesquelles va être générée, à partir d'un générateur de courant 24 relié à ces deux électrodes et commandé par un dispositif de pilotage 26, une zone de décharge 28 générant un « plasma » dans le mélange s'écoulant entre ces deux électrodes, étant disposées en regard et réparties angulairement de manière uniforme sur la circonférence de ces deux extrémités amont.

Le générateur de courant 24 est classiquement un générateur à l'état solide délivrant des impulsions de courant électrique d'amplitude comprise entre 5 et 50kV (typiquement 30kV), de fréquence comprise entre 10 et 100KHz (typiquement 50KHz) et d'une durée comprise entre 10 et 30 nanosecondes (typiquement 20ns) permettant de créer des décharges électriques dites NRP (Nanosecond Repetitive Puises) entre deux électrodes séparées d'une distance comprise entre 2 et 100 mm (typiquement 20 mm) et traversée par un mélange réactif subsonique.

Le dispositif de pilotage 26 peut être un contrôleur spécialement dédié à cette fonction de génération de plasma ou de façon plus générale être intégré dans l'électronique de commande du moteur et utiliser de ce fait différentes informations de température ou de pression relevées en temps réel en provenance de la chambre de combustion. Ces informations peuvent être complétées par des mesures optiques effectuées dans cette chambre de combustion et permettant de détecter une éventuelle extinction de la détonation.

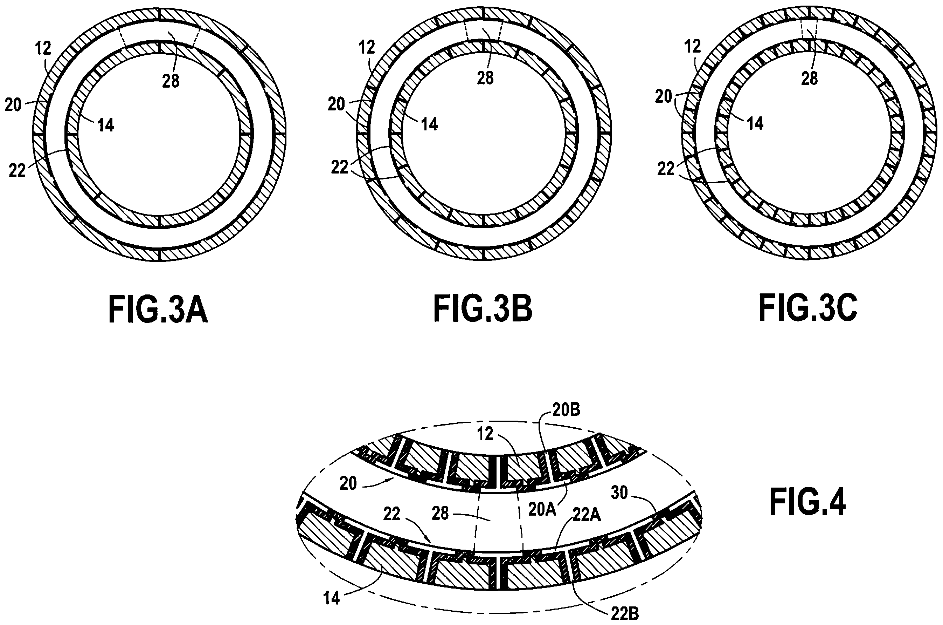

Il convient de noter que si, dans l'exemple de réalisation illustrée à la figure 2, la chambre de combustion comporte soixante-quatre paires d'électrodes 20, 22, il est clair que ce nombre ne saurait être limitatif et peut notamment, selon l'énergie électrique disponible, être plus faible, par exemple huit paires (figure 3A), seize paires (figure 3B) ou bien trente-deux paires (figure 3C). Un nombre plus élevé d'électrodes correspondant à une zone de décharge sectorielle 28 plus petite permet un contrôle plus fin de la rotation du front de détonation et une énergie électrique plus faible pour éventuellement le même résultat, au détriment toutefois d'un dispositif de pilotage plus complexe à mettre en œuvre.

Comme le montre le détail de la figure 4, au niveau de la paroi externe 12 de la chambre de combustion comme au niveau de sa paroi interne 14, les électrodes 20, 22 présentent avantageusement chacune une section en T avec une première partie conductrice 20A, 22A formant une plaque effleurant à la surface interne de la chambre de combustion et une seconde partie conductrice 20B, 22B, perpendiculaire à la première et en contact électrique avec elle, traversant radialement cette chambre de combustion et destinée à assurer, via des fils électriques de liaison non représentés, la connexion électrique de la plaque conductrice avec le générateur de courant 24 qui va créer la zone de décharge 28.

Selon le nombre d'électrodes, cette zone de décharge 28 couvrira un secteur angulaire plus ou moins important de la chambre de combustion et le plaque conductrice 20A, 22A présentera donc une forme allant du sensiblement horizontale (pour soixante-quatre paires et plus) au fortement incurvée (pour huit paires et moins). Toutefois, quel que soit le nombre d'électrodes, la distance entre les deux plaques conductrices de deux électrodes adjacentes est toujours identique et reste de l'ordre d'au plus quelques millimètres pour faciliter le passage (la rotation) du front de détonation d'une paire d'électrodes à une autre.

Les électrodes avantageusement en métal et la chambre de combustion avantageusement un matériau composite sont de préférence séparées par une couche 30 d'un matériau isolant et avantageusement d'un matériau céramique pour isoler électriquement l'électrode en T de la structure composite de la chambre de combustion.

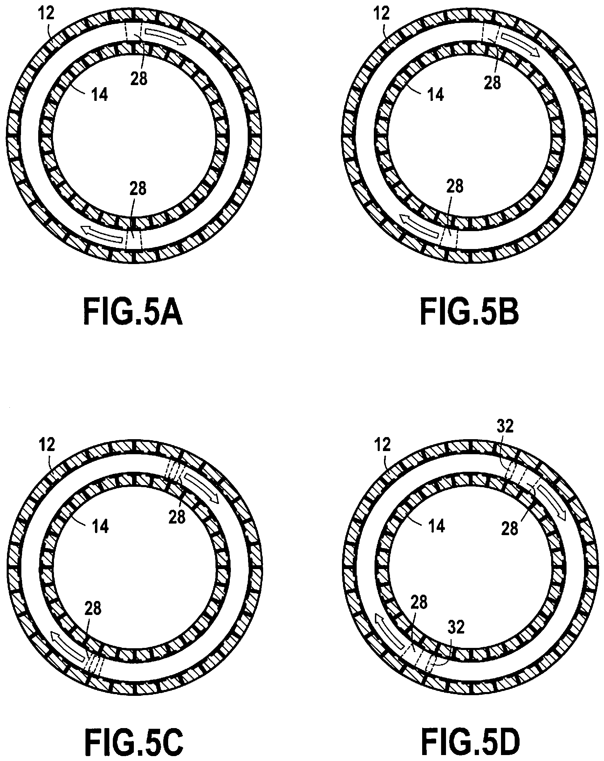

Le fonctionnement de la chambre de combustion est maintenant décrit en regard des figures 5A à 5D.

Il convient tout d'abord à procéder à l'allumage de la chambre de combustion consistant à faire détoner le mélange une première fois, c'est-à-dire à initier un ou plusieurs fronts de détonation 32 en générant des zones de décharges 28 «tournantes» par application séquentielle, à partir du générateur de courant, d'impulsions de courant électrique à chacune des paires d'électrodes de façon à créer une succession de décharges NRP (la figure 5A montre à titre d'exemple les deux premières décharges générées simultanément en opposition dans la chambre annulaire et la figure 5B les deux secondes sur les deux paires d'électrodes adjacentes) qui vont favoriser la détonation lors du passage de l'onde de choc dans le mélange réactif et permettre à une onde de détonation de parcourir en permanence la chambre annulaire (figure 5C). La «rotation» simultanée des deux zones de décharge (illustrée par la flèche) résultant du basculement successif de l'alimentation d'une paire d'électrodes à une autre (l'alimentation de la paire précédente étant alors coupée du fait de ce basculement) peut être qualifiée de «discrète» puisqu'elle ne correspond qu'à l'application successive du signal électrique à des paires d'électrodes différentes. L'objectif de la création du plasma dans la zone de détonation est de diminuer l'énergie d'activation et en particulier d'éviter le découplage entre l'onde de choc et le front de réaction qui suit le choc.

En appliquant de nouvelles impulsions de courant électrique au niveau de la ou des paires d'électrodes disposées juste en avant du front de détonation (figure 5D), on génère une nouvelle zone de décharge 28 puis d'autres encore, en fonction de l'avancement de ce front, en faisant de même l'une après l'autre à chacune des paires d'électrodes suivantes de manière à toujours précéder le ou les fronts de détonation 32. La zone de décharge «prépare» ainsi la détonation/combustion et lorsque le front se rapproche de la zone de décharge, on applique le signal électrique sur la paire d'électrodes suivantes (l'alimentation de la paire précédente étant alors coupée). Ainsi, la succession des décharges électriques entre les électrodes maintient chaque front de détonation 32 dans la chambre de combustion.

Avec le principe des décharges NRP, la combustion de mélange à fortes énergies d'activation est favorisée. Cela est dû notamment au fait que le procédé génère d'une part de l'oxygène atomique (02 -> 20) qui favorise les réactions chimiques et d'autre part la formation du H2 qui accélère également la combustion. En outre, on peut noter une amélioration de la stabilité de la flamme et une extension de la limite d'extinction pauvre. L'intérêt de l'invention appliqué à la propulsion aérobie est que l'on peut initier et «assister» la détonation par des décharges NRP pour un mélange d'air et de kérosène liquide dont la «détonabilité» n'était *a priori* pas garantie.

## Revendications

1. Chambre de combustion annulaire et du type à onde de détonation continue permettant, à partir d'un mélange d'un combustible et d'un comburant injecté selon une direction axiale F, de délivrer une production continue de gaz chauds issus d'ondes de détonation, la chambre de combustion (10) comportant :
une pluralité de paires d'électrodes (20, 22) réparties angulairement de manière uniforme en deux couronnes concentriques, les deux électrodes d'une même paire, appartenant chacune à une couronne différente, étant alignées radialement,
un générateur de courant (24) commandé par un dispositif de pilotage (26) pour générer des décharges électriques NRP entre ladite pluralité de paires d'électrodes, ledit générateur de courant étant configuré pour alimenter en courant simultanément au moins une paire d'électrodes, de façon à générer au moins une première zone de décharge (28) puis alimenter séquentiellement l'une après l'autre chacune desdites paires d'électrodes desdites couronnes en arrêtant l'alimentation de ladite au moins une paire d'électrodes lorsque ladite au moins une paire d'électrodes adjacente doit être alimentée et ainsi permettre à une onde de détonation de parcourir en permanence ladite chambre de combustion annulaire.

2. Chambre de combustion annulaire selon la revendication 1, **caractérisée en ce que** ladite pluralité d'électrodes est disposée au niveau d'extrémités amont (12A, 14A) respectives de parois externe (12) et interne (14) de ladite chambre de combustion annulaire.

3. Chambre de combustion annulaire selon la revendication 1, **caractérisée en ce que** ledit générateur de courant est configuré pour alimenter chacune desdites paires d'électrodes précédant au moins un front de détonation (32) de ladite onde de détonation.

4. Chambre de combustion annulaire selon la revendication 1, **caractérisée en ce que** ledit générateur de courant est un générateur à l'état solide délivrant des impulsions de courant d'amplitude comprise entre 5 et 50kV, de fréquence comprise entre 10 et 100KHz et d'une durée comprise entre 10 et 30 nanosecondes et **en ce que** les deux électrodes d'une même paire sont séparées d'une distance comprise entre 2 et 100mm.

5. Chambre de combustion annulaire selon la revendication 1, **caractérisée en ce que** lesdites électrodes présentent chacune une section en T avec une première partie conductrice (20A, 22A) formant plaque effleurant à la surface interne de ladite chambre de combustion annulaire et une seconde partie conductrice (20B, 22B), perpendiculaire à la première, en contact électrique avec elle et traversant radialement ladite chambre de combustion annulaire pour assurer une connexion électrique de ladite plaque conductrice avec ledit générateur de courant.

6. Chambre de combustion annulaire selon la revendication 5, **caractérisée en ce que** deux plaques conductrices de deux électrodes adjacentes comportent entres elles une distance de l'ordre d'au plus quelques millimètres.

7. Chambre de combustion annulaire selon la revendication 5 ou la revendication 6, **caractérisée en ce que** lesdites électrodes et ladite chambre de combustion annulaire sont séparées par une couche de matériau isolant (30) pour isoler électriquement lesdites électrodes de la structure de la chambre de combustion annulaire.

8. Chambre de combustion annulaire selon la revendication 7, **caractérisée en ce que** ledit matériau électriquement isolant est un matériau céramique.

9. Chambre de combustion annulaire selon l'une quelconque des revendications 1 à 8, **caractérisée en ce que** chaque couronne comporte un nombre d'électrodes compris entre huit et soixante-quatre.

10. Turbomachine comportant une chambre de combustion annulaire selon l'une quelconque des revendications 1 à 9.

## Patentansprüche

1. Ringförmige Brennkammer vom Typ mit kontinuierlicher Detonationswelle, die ermöglicht, aus einem Gemisch aus einem Treibstoff und einem Verbrennungsmittel, das in axialer Richtung F eingespritzt wird, eine kontinuierliche Erzeugung von aus Detonationswellen stammenden heißen Gasen bereitzustellen, wobei die Brennkammer (10) umfasst:
eine Vielzahl von Elektrodenpaaren (20, 22), die in zwei konzentrischen Kränzen winkelmäßig gleichmäßig verteilt sind, wobei die beiden Elektroden eines gleichen Paares, die jeweils zu einem anderen Kranz gehören, radial ausgerichtet sind,
einen Stromgenerator (24), der durch eine Steuervorrichtung (26) gesteuert wird, um elektrische NRP Entladungen zwischen der Vielzahl von Elektrodenpaaren zu erzeugen, wobei der Stromgenerator dazu ausgelegt ist, gleichzeitig wenigstens ein Elektrodenpaar mit Strom zu versorgen, um wenigstens einen ersten Entladungsbereich (28) zu erzeugen, anschließend sequentiell nacheinander jedes der Elektrodenpaare der Kränze zu versorgen, indem die Versorgung des wenigstens einen Elektrodenpaares gestoppt wird, wenn das wenigstens eine benachbarte Elektrodenpaar versorgt werden muss, und somit einer Detonationswelle zu ermöglichen, die ringförmige Brennkammer kontinuierlich zu durchlaufen.

2. Ringförmige Brennkammer nach Anspruch 1, **dadurch gekennzeichnet, dass** die Vielzahl von Elektroden im Bereich von jeweiligen stromaufwärtigen Enden (12A, 14A) einer Außenwand (12) und einer Innenwand (14) der ringförmigen Brennkammer angeordnet ist.

3. Ringförmige Brennkammer nach Anspruch 1, **dadurch gekennzeichnet, dass** der Stromgenerator dazu ausgelegt ist, eine jedes der Elektrodenpaare, das wenigstens einer Detonationsfront (32) der Detonationswelle vorausgeht, zu versorgen.

4. Ringförmige Brennkammer nach Anspruch 1, **dadurch gekennzeichnet, dass** der Stromgenerator ein Festkörpergenerator ist, der Stromimpulse mit einer Amplitude zwischen 5 und 50 kV, einer Frequenz zwischen 10 und 100 kHz und einer Dauer zwischen 10 und 30 Nanosekunden liefert, und dass die beiden Elektroden eines gleichen Paares durch einen Abstand im Bereich zwischen 2 und 100 mm voneinander getrennt sind.

5. Ringförmige Brennkammer nach Anspruch 1, **dadurch gekennzeichnet, dass** die Elektroden jeweils einen T-förmigen Querschnitt mit einem ersten leitenden Teil (20A, 22A) aufweisen, der eine Platte bildet, welche an der Innenfläche der ringförmigen Brennkammer leicht anliegt, sowie einem zweiten leitenden Teil (20B, 22B), der zu dem ersten senkrecht verläuft, mit diesem in elektrischem Kontakt ist und die ringförmige Brennkammer radial durchquert, um eine elektrische Verbindung der leitenden Platte mit dem Stromgenerator sicherzustellen.

6. Ringförmige Brennkammer nach Anspruch 5, **dadurch gekennzeichnet, dass** zwei leitende Platten von zwei benachbarten Elektroden zwischen sich einen Abstand in der Größenordnung von höchstens einigen Millimetern aufweisen.

7. Ringförmige Brennkammer nach Anspruch 5 oder Anspruch 6, **dadurch gekennzeichnet, dass** die Elektroden und die ringförmige Brennkammer durch eine Schicht aus Isoliermaterial (30) getrennt sind, um die Elektroden von der Struktur der ringförmigen Brennkammer elektrisch zu isolieren.

8. Ringförmige Brennkammer nach Anspruch 7, **dadurch gekennzeichnet, dass** das elektrisch isolierende Material ein Keramikmaterial ist.

9. Ringförmige Brennkammer nach einem der Ansprüche 1 bis 8, **dadurch gekennzeichnet, dass** jeder Kranz eine Anzahl von Elektroden zwischen acht und vierundsechzig aufweist.

10. Turbomaschine, die eine ringförmige Brennkammer nach einem der Ansprüche 1 bis 9 umfasst.

## Claims

1. An annular combustion chamber of the continuous detonation wave type enabling a mixture of a fuel and an oxidizer injected in an axial direction F to be used to deliver continuous production of hot gas from detonation waves, the combustion chamber (10) comprising:
• a plurality of electrode pairs (20, 22) that are angularly distributed in uniform manner in two concentric rings, the two electrodes of a same pair each belonging to a different ring and being in radial alignment; and
• a current generator (24) controlled by a control device (26) to generate NRP electric discharges between said plurality of electrode pairs, said current generator being configured to supply current to at least a first pair of electrodes so as to generate at least one first discharge zone (28) and then to sequentially supply, one after another, each of said electrode pairs of said rings by stopping supplying said at least one electrode pair when said at least one adjacent electrode pair is to be supplied, thereby enabling a detonation wave to travel continuously around said annular combustion chamber.

2. An annular combustion chamber according to claim 1, **characterized in that** said plurality of electrodes is arranged at the respective upstream ends (12A, 14A) of outer and inner walls (12, 14) of said annular combustion chamber.

3. An annular combustion chamber according to claim 1, **characterized in that** said current generator is configured to supply each of said electrode pairs preceding at least one detonation front (32) of said detonation wave.

4. An annular combustion chamber according to claim 1, **characterized in that** said current generator is a solid state generator supplying current pulses having an amplitude from 5 to 50kV, a frequency from 10 to 100KHz and a period from 10 to 30ns and **in that** the two electrodes of a same pair are spaced apart by a distance from 2 to 100mm.

5. An annular combustion chamber according to claim 1, **characterized in that** each of said electrodes presents a T-shaped section with a first conductive portion (20A, 22A) forming a plate flush with the inside surface of said annular combustion chamber and a second conductive portion (20B, 22B) perpendicular to the first one, in electrical contact therewith, and extending radially transversely to said annular combustion chamber in order to provide an electrical connection between said conductive plate and said current generator.

6. An annular combustion chamber according to claim 5, **characterized in that** two conductive plates of two adjacent electrodes are spaced apart by a distance of the order of no more than a few millimeters.

7. An annular combustion chamber according to claim 5 or claim 6, **characterized in that** said electrodes and said annular combustion chamber are spaced apart by a layer of insulating material (30) for electrically insulating said electrodes from the structure of the annular combustion chamber.

8. An annular combustion chamber according to claim 7, **characterized in that** said electrically insulating material is a ceramic material.

9. An annular combustion chamber according to any one of claims 1 to 8, **characterized in that** each ring comprises a number of electrodes lying in the range eight to sixty-four.

10. A turbine engine including an annular combustion chamber according to any one of claims 1 to 9.
